# EUROPEAN PATENT APPLICATION

(11) **EP 3 121 705 A1**
(43) Date of publication of application: **25.01.2017**
(21) Application number: 16182070.9
(22) Date of filing: 30.05.2014
(51) Int. Cl.: G06F 3/06

(54) **SHARING A VIRTUAL HARD DISK ACROSS MULTIPLE VIRTUAL MACHINES**

(30) Priority: 03.06.2013 US 201313908866
(62) Divisional of application: 14737068.8
(71) Applicant: Microsoft Technology Licensing, LLC, Redmond, WA 98052 (US)
(72) Inventor: D'Amato, Andrea, Redmond, WA 98052-6399 (US); Shankar, Vinod R., Redmond, WA 98052-6399 (US); Oshins, Jacob, Redmond, WA 98052-6399 (US); Kurjanowicz, Matthew D., Redmond, WA 98052-6399 (US); Petter, Vladimir, Redmond, WA 98052-6399 (US); Starks, John A., Redmond, WA 98052-6399 (US)
(74) Representative: Grünecker Patent- und Rechtsanwälte PartG mbB

(57) **Abstract**

Embodiments provide a method and system for sharing storage among a plurality of virtual machines. Specifically, one or more embodiments are directed to sharing a virtual hard disk with various virtual machines in a virtual machine cluster. In embodiments, a command is sent from a virtual machine to a local parser. The parser prepares the command for transport over a file system protocol. The command is sent to a remote file server using the file system protocol. When the command is received by the file server, the file server unpacks the command, determines features about the command and converts the command to a format that executes the command on the virtual shared storage.

## Description

### BACKGROUND

Within the realm of highly available computing, servers are often clustered. That is, they work together as a group. In such configurations, if one server fails, other servers continue the work. As a result, one or more clients connected to the servers either see no interruption in service or see interruptions with very minimal impact. When these clusters of servers are virtualized, they still need shared disks. In current implementations, disk drives that are symmetrically available to all members of the cluster are used.

It is with respect to these and other general considerations that embodiments have been made. Also, although relatively specific problems have been discussed, it should be understood that the embodiments should not be limited to solving the specific problems identified in the background.

### SUMMARY

This summary is provided to introduce a selection of concepts in a simplified form that are further described below in the Detail Description section. This summary is not intended to identify key features or essential features of the claimed subject matter, nor is it intended to be used as an aid in determining the scope of the claimed subject matter.

Embodiments provide a method and system for sharing storage among a plurality of virtual machines. Specifically, one or more embodiments relate to sending commands from the plurality of virtual machines to the shared storage. In embodiments, the shared storage may be one or more virtual hard disks. The methods and system provided herein disclose sending a command from a virtual machine to a file server over a communication session established by a file system protocol. In certain embodiments, the command is issued from the virtual machine in a first format. Prior to being communicated to the file server over the file system protocol, the command is converted from the first format to a second format. As will be discussed below, the second format is based on preferences defined by the file system protocol. When the command is received at the file server, a filter automatically converts the command from the second format back to the first format. The filter then passes command to a parser which converts the command from the first format to a third format. The parser then executes the command on the shared storage.

### BRIEF DESCRIPTION OF THE DRAWINGS

Non-limiting and non-exhaustive embodiments are described with reference to the following Figures in which:
Figure 1 illustrates a system for sharing storage between a plurality of virtual machines according to one or more embodiments of the present disclosure;
Figure 2 illustrates a method for sharing storage between a plurality of virtual machines according to one or more embodiments of the present disclosure;
Figure 3 illustrates a method for filtering received commands that are to be executed on shared storage according to one or more embodiments of the present disclosure;
Figure 4 is a block diagram illustrating example physical components of a computing device that may be used with one or more embodiments of the present disclosure;
Figures 5A and 5B are simplified block diagrams of a mobile computing device that may be used with one or more embodiments of the present disclosure; and
Figure 6 is a simplified block diagram of a distributed computing system that may be used with one or more embodiments of the present disclosure.

### DETAILED DESCRIPTION

Various embodiments are described more fully below with reference to the accompanying drawings, which form a part hereof, and which show specific exemplary embodiments. However, embodiments may be implemented in many different forms and should not be construed as limited to the embodiments set forth herein; rather, these embodiments are provided so that this disclosure will be thorough and complete, and will fully convey the scope of the embodiments to those skilled in the art. Embodiments may be practiced as methods, systems or devices. Accordingly, embodiments may take the form of a hardware implementation, an entirely software implementation or an implementation combining software and hardware aspects. The following detailed description is, therefore, not to be taken in a limiting sense.

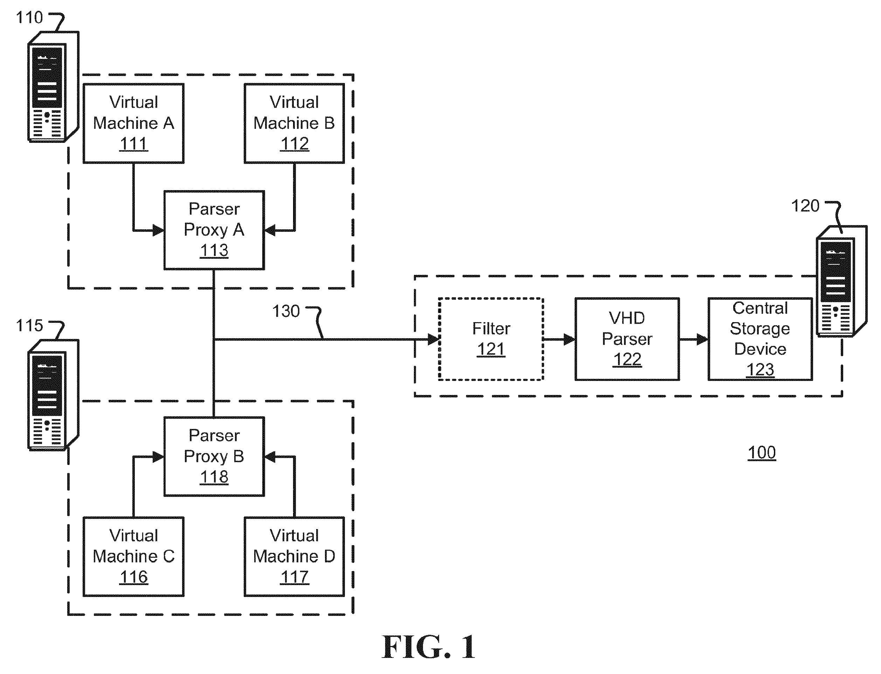

As will be explained in detail below, the methods and systems described herein enable multiple virtual machines in a computing environment to connect to, read data from, or write data to a central storage device. Figure 1 illustrates a system 100 for sharing storage among a plurality of virtual machines according to one or more embodiments of the present disclosure. One or more embodiments provide that the shared storage may be one or more virtual hard disks, one or more locations in a physical hard disk or a combination thereof.

In certain embodiments, a virtual machine may be configured to store and access data using a block storage protocol. As a virtual machine may have access to a virtual hard disk comprised of block storage, a virtual machine may be configured to interact with its virtual hard disk by executing block storage operations. These operations may include read operations, write operations, geometry operations, or other Small Computer System Interface (SCSI) or Internet Small Computer System Interface (ISCSI) commands.

However, in lieu of granting each virtual machine direct access to a block storage device capable of being shared by multiple services, such as a SAN, one or more embodiments disclosed herein provide that a virtual machine may access a virtual hard disk which is backed by a virtual hard disk file in such a way that it can be shared by other virtual machines simultaneously. In such embodiments, each virtual machine observes and interacts with the same virtual disk backed by that file. Accordingly, each block storage operation may need to be transmitted over a network from the physical host encompassing the virtual machine to storage on a central storage device. However, in order to ensure that these simultaneous changes don't interfere with or conflict with each other, embodiments provide that the block commands are transmitted to the central storage device over a file system or file system protocol. Specifically, one or more block storage commands are communicated to the remote file server utilizing a tunneling mechanism to enable the block storage commands to be communicated through the file system protocol.

Referring to Figure 1, the system 100 may comprise a plurality of nodes with each node having one or more virtual machines forming a virtual machine cluster. For example, as shown in Figure 1, Node A 110 has Virtual Machine A 111 and Virtual Machine B 112 forming a virtual machine cluster. Likewise, Node B 115 has Virtual Machine C 116 and Virtual Machine D 117 forming a virtual machine cluster. In certain embodiments, one virtual machine (e.g., Virtual Machine A 111) may be actively executing and sending commands to a remote file server 120 while the other virtual machine (e.g., Virtual Machine B 112) is serving as a backup. Thus, if Virtual Machine A 111 was to fail, the workload of Virtual Machine A 111 would failover to Virtual Machine B 112 and Virtual Machine B 112 would begin executing necessary commands and accessing the remote file server 120 as needed. Because Virtual Machine B can access the same remote file server as Virtual Machine A, Node A 110 does not need to wait for Virtual Machine A 111 to reset and reboot. As a result, little, if any, time and resources are wasted waiting for the Virtual Machine A 111 to come back online.

Although Figure 1 shows two nodes, Node A 110 and Node B 115, it is contemplated that a system 100 may be comprised of fewer or additional nodes. Additionally, although Figure 1 shows Node A 110 and Node B 115 running two virtual machines, it is contemplated that each node may have fewer or additional virtual machines running thereon and forming a cluster.

In certain embodiments, Node A 110 and Node B 115 may be server computers. In other embodiments, Node A 110 and Node B 115 may be client computers, such as, for example, a personal computer, tablet, laptop, smartphone, personal digital assistant and the like. As such, in certain embodiments, each of Node A 110 and Node B 115 may be configured as hypervisors. That is, Node A 110 and Node B 115 may be configured with software, hardware or firmware used to create and monitor virtual machine. As such, Node A 110 and Node B 115 may be referred to as host machines while Virtual Machine A 111, Virtual Machine B 112, Virtual Machine C 116 and Virtual Machine D 117 are called guest virtual machines.

In one or more embodiments, Node A 110 and Node B 115 present the operating system of each virtual machine a virtual operating platform. Additionally, Node A 110 and Node B 115 manage the execution of each operating system. In certain embodiments, Node A 110 and Node B 115 are HYPER-V Servers distributed by MICROSOFT Corp. of Redmond, WA.

As will be discussed, embodiments of the present disclosure described how to expose virtual hard disks to virtual machines and how to read and store the data written by the virtual machines in a virtual hard disk file that can be shared across the virtual machines. For example, when a virtual machine, such as, for example, Virtual Machine A 111 asks for a block on its disk, the data is read from a corresponding block from the virtual hard disk file and returned data to the virtual machine. Likewise, if Virtual Machine D 117 requests to write data on block, the data is transmitted to the virtual hard disk file. As will be discussed, when a virtual hard disk is shared, instead of mounting the virtual hard disk using a virtual hard disk parser on a physical host, a file handle to that virtual hard disk is opened on a remote file system. One advantage of this approach is that a virtual machine administrator can treat virtual disks like any other file, with a file history, with permissions expressed as Access Control Lists with auditing logs, file-based backup tools, and the like.

Additionally, the remote file system is configured to advertise its ability to use a block protocol rather than a file based protocol for the virtual hard disk on the remote file system. The block command is passed from the virtual machine through a file handle to the remote file system without the command being interpreted on the physical host (as would normally occur in a non-shared virtual hard disk scenario).

Embodiments also disclose mounting the virtual disk that is stored in the shared virtual hard disk on the remote file system and passing the block commands to the virtual disk. When the commands reach the a virtual hard disk parser, located at the remote file system for example, the virtual hard disk parser converts the block commands to file-based operations which enables the reading of data from or the writing of data to the virtual hard disk file. In certain embodiments, the filter tracks information about which virtual machines have the right to write to regions of the shared virtual hard disk. These rights may be defined by persistent reservations, such as, for example, by SCSI-3 Persistent Reservations. In certain embodiments, when virtual machine moves from one host to another, these rights (i.e., the reservations) move with it.

Referring back to Figure 1, one or more embodiments provide that each of Node A 110 and Node B 115 have a plurality of virtual machines running thereon and forming a virtual machine cluster. In certain embodiments, each virtual machine and virtual machine cluster accesses a central storage device 123 stored on a remote file server 120. Because each virtual machine in the system 100 has access to a central storage device 123 on the remote file server 120, each virtual machine may not be given access to a local virtual hard disk. However, in some embodiments, one or more virtual machines in a virtual machine cluster may be provided or given access to a local virtual hard disk as well as access to the central storage device 123 stored on the remote server 120.

In certain embodiments, the central storage device 123 may be comprised of a plurality of storage devices. In certain embodiments, the central storage device 123 may be comprised of physical storage, virtual storage, or a combination thereof. In implementations where the central storage device 123 is comprised of virtual storage, the virtual storage is backed by one or more physical disks.

As shown in Figure 1, the remote file server 120 may also include a filter 121 that is configured to receive, unpack and sort one or more commands received from Node A 110 and Node B 115. In embodiments, while the filter is shown as a component of the file server 120, it is contemplated that the filter 121 may be integrated into a function of the file server. Thus, the file server 120 itself would perform the functions described below with respect to the filter 121 without the filter 121 actually being part of the system 100.

In certain embodiments, the commands are communicated from Node A 110 and Node B 115 over a file system session 130 established by a file system protocol. When the commands have been unpacked and sorted, the filter 121 transmits the commands to a Virtual Hard Disk (VHD) parser 122 that is configured to convert the commands from block commands to file-based operations that are performed on the central storage device 123.

In certain embodiments, a virtual machine, such as, for example, Virtual Machine A 111 on Node A 110 may issue a command. As discussed above, the command may be in a block storage operation format such as, for example, a SCSI format, an ISCSI format and the like. Although specific formats are given, it is contemplated that a command issued from a virtual machine may be in a different format than those specifically listed.

Once the command is issued by Virtual Machine A 110, it is passed, either by Virtual Machine A, or its host, Node A 110, to a local parser (e.g., Parser Proxy A 113). As shown in Figure 1, each node in the system 100 has a local parser. For example, Node A 110 has Parser Proxy A 113 and Node B 115 has Parser Proxy B 118. Although Figure 1 shows that each virtual machine cluster has a local parser, it is contemplated that virtual machines on different nodes may comprise a virtual machine cluster.

For example, Virtual Machine A 111, Virtual Machine B 112, Virtual Machine C 116 and Virtual Machine D 117 may be configured to form a single virtual machine cluster even though they are hosted by two different nodes. In such cases, the virtual machine cluster may have a single parser (e.g., Parser Proxy A 113) that is accessible by each virtual machine in the virtual machine cluster when each of the virtual machines attempt to access the central storage device 123. Alternatively or additionally, even if the virtual machine cluster is made up of virtual machines on either the same hosts or different hosts, each host may still have a local parser for virtual disks that are not shared. It is also possible that parsers for shared disks would be located on Node A 110 and/or Node B 115 so as to enable the hosts to coordinate access to the central storage device 123.

Referring back to Figure 1 and the example from above, once a command is issued by Node A 110, the command is communicated to Parser Proxy A 113. Parser Proxy A 113 analyzes the command to determine the layout of Node A 110. Additionally, Parser Proxy A 113 converts the command from a block storage operation format into a format that is capable of being transmitted from Node A 110 to the remote file server 120 over a file system session 130 established by a file system protocol. In certain embodiments, the file system protocol may be a version of the Server Message Block Protocol (SMB) by MICROSOFT Corp. of Redmond, WA, the Network File System Protocol (NFS) protocol, or a local protocol.

For example, Node A 110 may issue a block storage operation and communicate the block storage operation to Parser Proxy A 113. Upon receipt of the block storage operation, Parser Proxy A 113 automatically formats the block storage command in such a way that the block storage operation is able to be transmitted to the remote file server 120 over the file system session 130 established by the file system protocol (e.g., a version of the SMB protocol). In certain embodiments, Parser Proxy A 113 formats the block storage operation in such a way that the block storage command may be tunneled through the file system session 130.

In embodiments where a version of the SMB protocol is used, the SMB session may be established at any time prior to Parser Proxy A 113 sending the block storage operation to the remote file server 120. By way of example, during the establishment of the SMB session between Node A 110 and the remote file server 120, a negotiation may occur to indicate that both Node A 110 and the remote file server 120 support multiple connections within a SMB session. This may include negotiating a version of the SMB protocol. In addition, Node A 110 and the remote file server 120 can also determine information about various interfaces and connections between Node A 110 and the remote file server 120. This includes the type of connection or channel and the speed of each connection or channel. Further, either Node A 110 and the remote file server 120 can sort the interfaces and connections by type and speed to determine the top interfaces. Thus, Node A 110 and the remote file server 120 can further determine which interfaces or channels should be used when additional channels are established to transfer data.

More specifically, one or more connection transports may be available between Node A 110 and the remote file server 120. For example, Node A 110 and the remote file server 120 may be connected by a variety of transports, such as Ethernet and Wi-Fi, as well as redundant connections of the same transport, such as multiple network interface cards (NIC). In addition, some connection transports may support capabilities such as Remote Direct Memory Access (RDMA) that affect the speed of one connection transport over another.

Referring back to Figure 1, once the block storage operation is tunneled through the file system session 130, the block storage operation is received at a filter 121 on the remote file server 120. In certain embodiments, the filter 121 is configured to unpack the "tunneled" block storage operation and convert the tunneled block storage operation back into the original block storage operation format. In certain embodiments, the filter 121 is configured to determine whether the block storage operation is a read command, a write command, an open command or a close command. Additionally, the filter 121 may be configured to determine if the command is to be executed on a physical file of the remote file server 120 or on a virtual hard disk that is backed by a file (e.g., a disk formatted according to, for example, the New Technology File System (NTFS) format).

Once the filter 121 restores the block storage operation into its original format, the filter 121 passes the block storage operation to the VHD filter 122. The VHD filter 122 may then format the block storage operation into a different format, such as, for example, a file system operation format, that can be executed on the central storage device 123. Once the block storage operation has been converted into the file system operation format, the requested operation is performed on the central storage device 123.

Referring back to the filter 121, in certain embodiments, the filter 121 may also pass additional information to the VHD parser depending on the received block storage operation (e.g., read, write, open, close etc.). For example, if the received block storage operation is a read command, the filter 121 may also send information regarding: (i) the identity, in the form of a handle, of a shared virtual disk file; (ii) the offset, in bytes, from the beginning of the virtual disk from which to read data; (iii) the number of bytes to read; (iv) the minimum number of bytes it to be read; and (v) the buffer that is to receive the data that is read. Likewise, if the block storage operation is a write command the filter 121 may specify: (i) the identity, in the form of a handle, of the shared virtual disk file; (ii) the offset, in bytes, from the beginning of the virtual disk where data should be written; (iii) the number of bytes to write; and (iv) a buffer containing the bytes to be written.

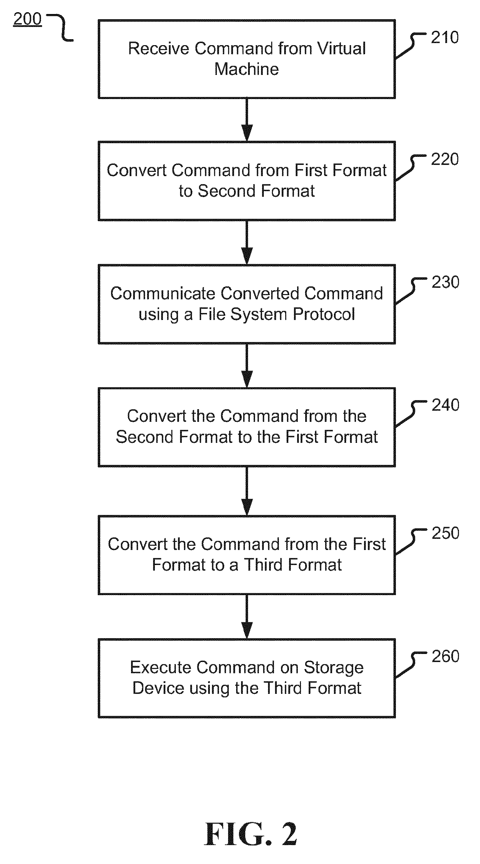

Figure 2 illustrates a method 200 for sharing storage between a plurality of virtual machines according to one or more embodiments of the present disclosure. In certain embodiments, the method 200 may be performed automatically and/or on the fly as the commands are passed through different components of a system, such as, for example, system 100 (Figure 1). For example, Virtual Machine A 111 of Node A 110 may issue a command (e.g., a block storage operation) on which the operations described below may be implemented as the issued command moves through the system 100.

Method 200 begins when a parser (e.g., Parser Proxy A 113 (Figure 1) receives a command issued by one or more virtual machines. In certain embodiments, the virtual machine may be part of a virtual machine cluster hosted by host computer configured as a hypervisor. In certain embodiments, the command may be in a first format, such as, for example, a block storage operation format. In certain embodiments, the block storage operation format may include read commands, write commands, open commands, close commands as well as SCSI or ISCSI commands.

Once the parser receives the command, the parser converts 220 the format of the command from the first format into a second format. In certain embodiments, the second format includes a command enabling disk sharing, such as, for example, SCSI-3 Persistent Reservation commands. In embodiments, the SCSI-3 Persistent Reservations may be durably stored, such as, for example, in the virtual hard disk file. Additionally, the second format may include an identifier associated with the virtual machine that sent the command. Accordingly, the virtual machine's persistent reservations may be maintained even when the virtual machine is moved from one physical host to another physical host. In certain embodiments, the conversion process occurs so as to enable the parser to send the command over a file system protocol, such as, for example, a version of the SMB protocol (e.g., using SMB file handles and/or SMB FSCTL codes).

In certain embodiments, the conversion from the first format to the second format may occur because the file system protocol does not transport data having the first format. In other embodiments, the format conversion between the first format and the second format occurs so as to enable the command to be communicated between the host computer and remote file server in a manner that utilizes one or more features of the file system protocol.

For example, in implementations where the file system protocol is a version of the SMB protocol, the command may be communicated to a remote file server (e.g., remote file server 120 (Figure 1) using capabilities of the SMB protocol including auto discovery, authentication, authorization, bandwidth aggregation, support for RDMA and TCP, zero copy over RDMA and the like. In certain embodiments, the conversion of the command from the first format to the second format comprises preparing the command with a tunneling protocol to enable the command to be tunneled through the file system protocol session to the remote server.

Once the command has been converted from the first format to the second format, flow then proceeds to operation 230 in which the command is communicated over the file system session to the remote file server. As discussed above, the command may be communicated to the remote file server over the file system protocol session by tunneling the block command through the file system protocol.

Once the command has been received by the remote file server, a filter on the remote file server converts 240 the command from the second format back to the first format. For example, the filter (filter 121 (Figure 1) may be configured to receive the formatted command and unpack and/or decode the formatted command. When finished with the unpacking and/or decoding, the command will be in the same format it was when it was issued by the virtual machine. For example, if the command is a SCSI command that was tunneled through the SMB protocol, the filter would extract the SCSI command upon receipt of the command.

Flow then proceeds to operation 250 in which the command is passed from the filter to a parser (e.g., VHD parser 122 (Figure 1)) and converted from the first format to a third format. In certain embodiments, the first format, second format and third format are all different formats. As discussed, in certain embodiments, the first format may be a SCSI command and the second format may be a tunneling format. Likewise, the third format may be an I/O Request Packet (IRP) format. In certain embodiments, command may be converted to the third format in order to process the command at a higher more efficient rate.

When the data is converted into the third format, operation 260 provides that the command is executed on the storage device (e.g., central storage device 123 (Figure 1) by the parser. For example, the VHD parser 122 may be configured to read the command and performs I/O operations set forth by the command on a virtual hard disk stored on the file server.

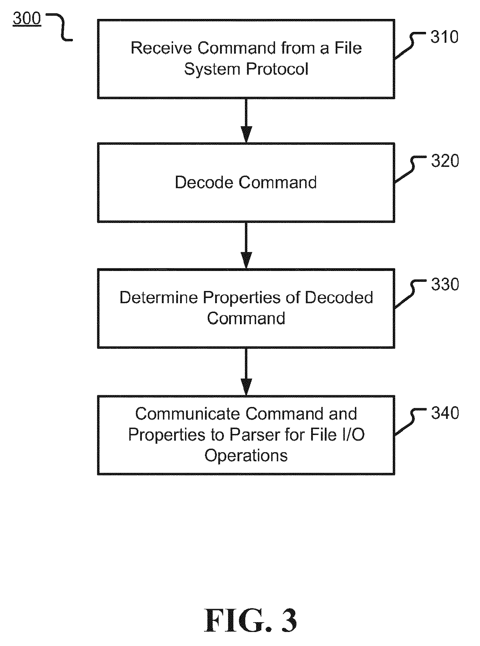

Figure 3 illustrates a method 300 for filtering a received command according to one or more embodiments of the present disclosure. In certain embodiments, a filter such as, for example, filter 121 (Figure 1) performs the method 300 when a command (e.g., a block storage operation) is received from a file system protocol. As discussed, the command may have been transported through the file system protocol via a tunneling mechanism. As a result, the filter may be configured to unpack the received command and determine one or more properties associated with the command.

Method 300 begins when a filter on a remote file server (e.g., remote file server 120 (Figure 1) receives 310 a command from a file system session (e.g., file system session 130) established by a file system protocol. In certain embodiments, the file system protocol may be a version of the SMB protocol. In other embodiments, the file system protocol may be a NFS protocol or a locally known protocol.

Once received, the command is decoded 320 by the filter. In certain embodiments, the decoding process comprises unpacking and/or extracting one or more commands from the data received via the file system protocol such that the received command is in the same format in which it was initially issued from a virtual machine. For example, if the command was a SCSI command that was tunneled within a file system protocol transport mechanism, operation 320 provides that the command is unpacked and restored to its original state (e.g., a SCSI command).

Flow then proceeds to operation 330 in which the filter determines one or more properties associated with the decoded command. In certain embodiments, the file system protocol, or a parser (e.g., parser 113 of Figure 1) may mark the command in such a way that the filter resident on the remote file sever may be able to determine whether the associated operation is to occur on a virtual hard disk or on a physical hard disk.

If it is determined that the operation is to be performed on a virtual hard disk, the filter may also determine a handle associated with the virtual hard disk, an offset into the virtual hard disk and the like. In implementations where the command is an open command, the filter may determine that the virtual hard disk is to be surfaced (e.g., which paths, either physical or remote, need to be connected to the virtual hard disk) by persistent reservation (e.g., reserving the virtual hard disk even when the virtual hard disk or the file server on which the virtual hard disk resides is offline or has been rebooted) and given a handle so that future commands can reference the virtual hard disk using the handle.

Once the command has been converted back to the original format and one or more properties regarding the command are discovered, the command is communicated 340 to the parser for file I/O operations. As discussed above, the parser may be configured to automatically convert the command into a third format upon receipt of the command. In certain embodiments, the third format may be an IRP format. Thus, for example, the parser may convert the SCSI command format to the IRP format. Once converted, the parser performs the request operation on the central storage device.

The embodiments and functionalities described herein may operate via a multitude of computing systems including, without limitation, desktop computer systems, wired and wireless computing systems, mobile computing systems (e.g., mobile telephones, netbooks, tablet or slate type computers, notebook computers, and laptop computers), hand-held devices, multiprocessor systems, microprocessor-based or programmable consumer electronics, minicomputers, and mainframe computers.

In addition, the embodiments and functionalities described herein may operate over distributed systems (e.g., cloud-based computing systems), where application functionality, memory, data storage and retrieval and various processing functions may be operated remotely from each other over a distributed computing network, such as the Internet or an intranet. User interfaces and information of various types may be displayed via on-board computing device displays or via remote display units associated with one or more computing devices. For example user interfaces and information of various types may be displayed and interacted with on a wall surface onto which user interfaces and information of various types are projected. Interaction with the multitude of computing systems with which embodiments of the present disclosure may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

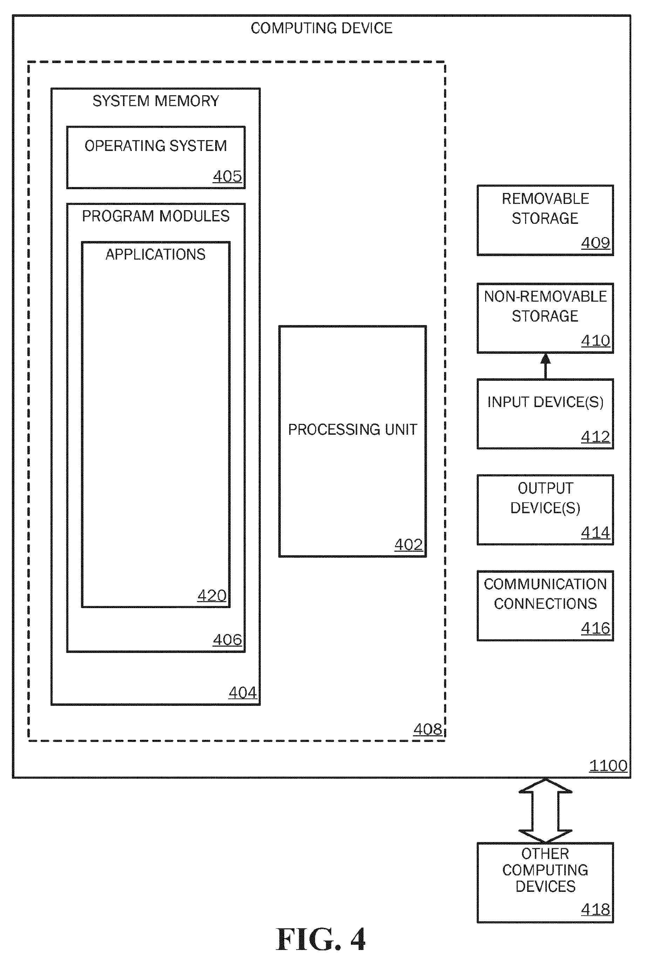

Figures 4-6 and the associated descriptions provide a discussion of a variety of operating environments in which embodiments of the present disclosure may be practiced. However, the devices and systems illustrated and discussed with respect to Figures 4-6 are for purposes of example and illustration and are not limiting of a vast number of computing device configurations that may be utilized for practicing embodiments described herein.

Figure 4 is a block diagram illustrating physical components (i.e., hardware) of a computing device 1100 with which embodiments of the present disclosure may be practiced. The computing device components described below may be suitable for the computing devices described above including the Node A 110 and Node B 115. In a basic configuration, the computing device 1100 may include at least one processing unit 402 and a system memory 404. Depending on the configuration and type of computing device, the system memory 404 may comprise, but is not limited to, volatile storage (e.g., random access memory), non-volatile storage (e.g., read-only memory), flash memory, or any combination of such memories. The system memory 404 may include an operating system 405 and one or more program modules 406 suitable for running software applications 420. The operating system 405, for example, may be suitable for controlling the operation of the computing device 1100. Furthermore, embodiments of the present disclosure may be practiced in conjunction with a graphics library, other operating systems, or any other application program and is not limited to any particular application or system. This basic configuration is illustrated in Figure 4 by those components within a dashed line 408. The computing device 1100 may have additional features or functionality. For example, the computing device 1100 may also include additional data storage devices (removable and/or non-removable) such as, for example, magnetic disks, optical disks, or tape. Such additional storage is illustrated in Figure 4 by a removable storage device 409 and a non-removable storage device 410.

As stated above, a number of program modules and data files may be stored in the system memory 404. While executing on the processing unit 402, the program modules 406 may perform processes including, but not limited to, one or more of the stages of the methods 200 and 300 illustrated in Figures 2-3. Other program modules that may be used in accordance with embodiments of the present disclosure may include electronic mail and contacts applications, word processing applications, spreadsheet applications, database applications, slide presentation applications, drawing or computer-aided application programs, etc.

Furthermore, embodiments of the present disclosure may be practiced in an electrical circuit comprising discrete electronic elements, packaged or integrated electronic chips containing logic gates, a circuit utilizing a microprocessor, or on a single chip containing electronic elements or microprocessors. For example, embodiments of the present disclosure may be practiced via a system-on-a-chip (SOC) where each or many of the components illustrated in Figure 4 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein may be operated via application-specific logic integrated with other components of the computing device 1100 on the single integrated circuit (chip). Embodiments of the present disclosure may also be practiced using other technologies capable of performing logical operations such as, for example, AND, OR, and NOT, including but not limited to mechanical, optical, fluidic, and quantum technologies. In addition, embodiments of the present disclosure may be practiced within a general purpose computer or in any other circuits or systems.

The computing device 1100 may also have one or more input device(s) 412 such as a keyboard, a mouse, a pen, a sound input device, a touch input device, etc. The output device(s) 414 such as a display, speakers, a printer, etc. may also be included. The aforementioned devices are examples and others may be used. The computing device 104 may include one or more communication connections 416 allowing communications with other computing devices 418. Examples of suitable communication connections 416 include, but are not limited to, RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 404, the removable storage device 409, and the non-removable storage device 410 are all computer storage media examples (i.e., memory storage.) Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 1100. Any such computer storage media may be part of the computing device 1100. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

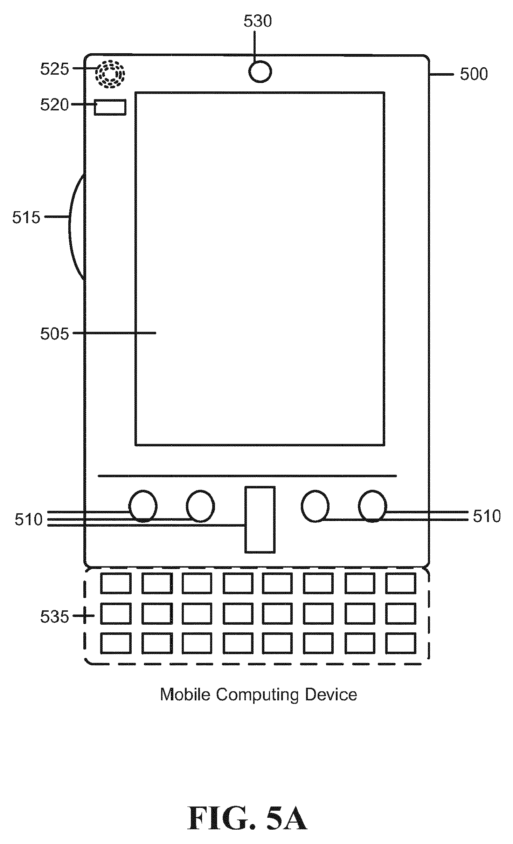

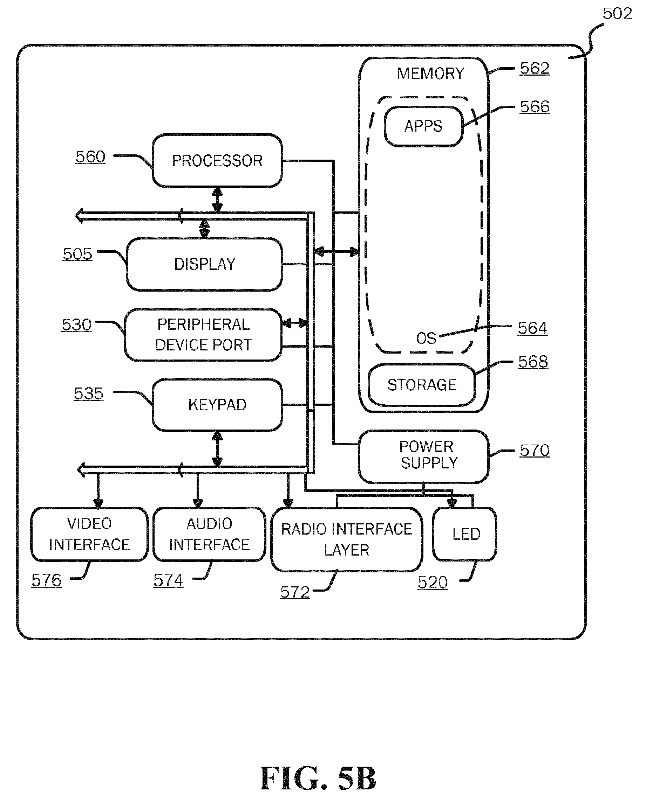

Figures 5A and 5B illustrate a mobile computing device 500, for example, a mobile telephone, a smart phone, a tablet personal computer, a laptop computer, and the like, with which embodiments of the present disclosure may be practiced. With reference to Figure 5A, one embodiment of a mobile computing device 500 for implementing the embodiments is illustrated. In a basic configuration, the mobile computing device 500 is a handheld computer having both input elements and output elements. The mobile computing device 500 typically includes a display 505 and one or more input buttons 510 that allow the user to enter information into the mobile computing device 500. The display 505 of the mobile computing device 500 may also function as an input device (e.g., a touch screen display). If included, an optional side input element 515 allows further user input. The side input element 515 may be a rotary switch, a button, or any other type of manual input element. In alternative embodiments, mobile computing device 500 may incorporate more or less input elements. For example, the display 505 may not be a touch screen in some embodiments. In yet another alternative embodiment, the mobile computing device 500 is a portable phone system, such as a cellular phone. The mobile computing device 500 may also include an optional keypad 535. Optional keypad 535 may be a physical keypad or a "soft" keypad generated on the touch screen display. In various embodiments, the output elements include the display 505 for showing a graphical user interface (GUI), a visual indicator 520 (e.g., a light emitting diode), and/or an audio transducer 525 (e.g., a speaker). In some embodiments, the mobile computing device 500 incorporates a vibration transducer for providing the user with tactile feedback. In yet another embodiment, the mobile computing device 500 incorporates input and/or output ports, such as an audio input (e.g., a microphone jack), an audio output (e.g., a headphone jack), and a video output (e.g., a HDMI port) for sending signals to or receiving signals from an external device.

Figure 5B is a block diagram illustrating the architecture of one embodiment of a mobile computing device. That is, the mobile computing device 500 can incorporate a system (i.e., an architecture) 502 to implement some embodiments. In one embodiment, the system 502 is implemented as a "smart phone" capable of running one or more applications (e.g., browser, e-mail, calendaring, contact managers, messaging clients, games, and media clients/players). In some embodiments, the system 502 is integrated as a computing device, such as an integrated personal digital assistant (PDA) and wireless phone.

One or more application programs 566 may be loaded into the memory 562 and run on or in association with the operating system 564. Examples of the application programs include phone dialer programs, e-mail programs, personal information management (PIM) programs, word processing programs, spreadsheet programs, Internet browser programs, messaging programs, and so forth. The system 502 also includes a non-volatile storage area 568 within the memory 562. The non-volatile storage area 568 may be used to store persistent information that should not be lost if the system 502 is powered down. The application programs 566 may use and store information in the non-volatile storage area 568, such as e-mail or other messages used by an e-mail application, and the like. A synchronization application (not shown) also resides on the system 502 and is programmed to interact with a corresponding synchronization application resident on a host computer to keep the information stored in the non-volatile storage area 568 synchronized with corresponding information stored at the host computer. As should be appreciated, other applications may be loaded into the memory 562 and run on the mobile computing device 500described herein.

The system 502 has a power supply 570, which may be implemented as one or more batteries. The power supply 570 might further include an external power source, such as an AC adapter or a powered docking cradle that supplements or recharges the batteries.

The system 502 may also include a radio 572 that performs the function of transmitting and receiving radio frequency communications. The radio 572 facilitates wireless connectivity between the system 502 and the "outside world", via a communications carrier or service provider. Transmissions to and from the radio 572 are conducted under control of the operating system 564. In other words, communications received by the radio 572 may be disseminated to the application programs 566 via the operating system 564, and vice versa.

The visual indicator 520 may be used to provide visual notifications, and/or an audio interface 574 may be used for producing audible notifications via the audio transducer 525. In the illustrated embodiment, the visual indicator 520 is a light emitting diode (LED) and the audio transducer 525 is a speaker. These devices may be directly coupled to the power supply 570 so that when activated, they remain on for a duration dictated by the notification mechanism even though the processor 560 and other components might shut down for conserving battery power. The LED may be programmed to remain on indefinitely until the user takes action to indicate the powered-on status of the device. The audio interface 574 is used to provide audible signals to and receive audible signals from the user. For example, in addition to being coupled to the audio transducer 525, the audio interface 574 may also be coupled to a microphone to receive audible input, such as to facilitate a telephone conversation. In accordance with embodiments of the present disclosure, the microphone may also serve as an audio sensor to facilitate control of notifications, as will be described below. The system 502 may further include a video interface 576 that enables an operation of an on-board camera 530 to record still images, video stream, and the like.

A mobile computing device 500 implementing the system 502 may have additional features or functionality. For example, the mobile computing device 500 may also include additional data storage devices (removable and/or non-removable) such as, magnetic disks, optical disks, or tape. Such additional storage is illustrated in Figure 5B by the non-volatile storage area 568.

Data/information generated or captured by the mobile computing device 500 and stored via the system 502 may be stored locally on the mobile computing device 500, as described above, or the data may be stored on any number of storage media that may be accessed by the device via the radio 572 or via a wired connection between the mobile computing device 500 and a separate computing device associated with the mobile computing device 500, for example, a server computer in a distributed computing network, such as the Internet. As should be appreciated such data/information may be accessed via the mobile computing device 500 via the radio 572 or via a distributed computing network. Similarly, such data/information may be readily transferred between computing devices for storage and use according to well-known data/information transfer and storage means, including electronic mail and collaborative data/information sharing systems.

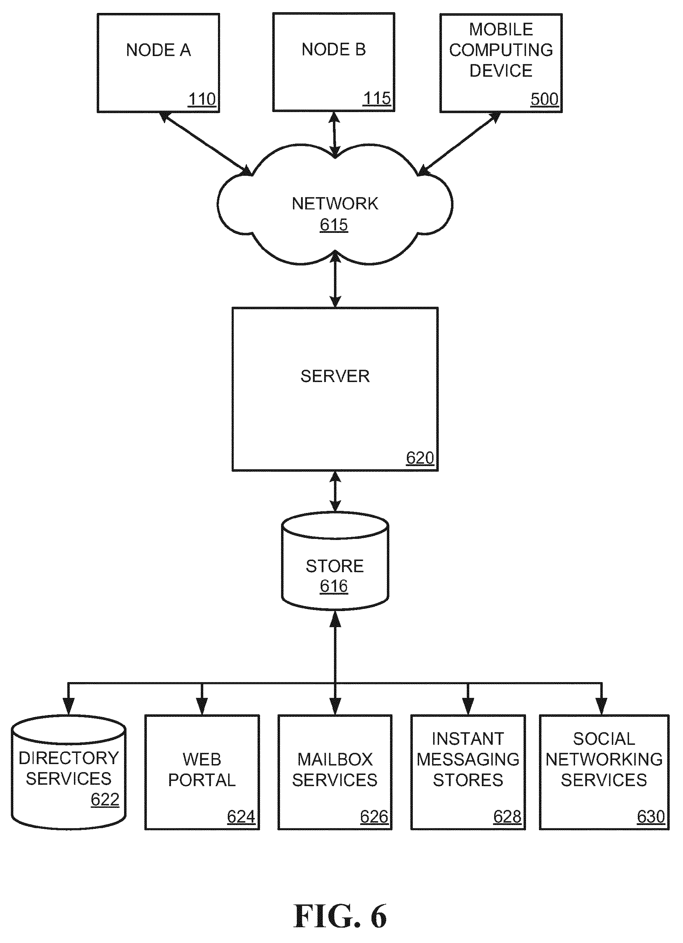

Figure 6 illustrates one embodiment of the architecture of a system for transferring data between different computing devices as described above. The data transferred between Node A 110, Node B 115 and the remote file server 120 may be stored in different communication channels or other storage types. For example, various documents may be stored using a directory service 622, a web portal 624, a mailbox service 626, an instant messaging store 628, or a social networking site 630. A server 620 may provide data to and from Node A 110 and Node B 115. As one example, the server 620 may be a web server. The server 620 may provide data to either Node A 110 or Node B 115 over the web through a network 615. By way of example, the Node A 110 or Node B 115 may be embodied in a personal computer, a tablet computing device and/or a mobile computing device 500 (e.g., a smart phone). Any of these embodiments may obtain content from the store 616.

Embodiments of the present disclosure, for example, are described above with reference to block diagrams and/or operational illustrations of methods, systems, and computer program products according to embodiments of the present disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more embodiments provided in this application are not intended to limit or restrict the scope of the present disclosure as claimed in any way. The embodiments, examples, and details provided in this application are considered sufficient to convey possession and enable others to make and use the best mode of the claimed embodiments. The claimed embodiments should not be construed as being limited to any embodiment, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate embodiments falling within the spirit of the broader aspects of the general inventive concept embodied in this application that do not depart from the broader scope of the claimed embodiments.

### The following is a list of further preferred embodiments of the invention:

Embodiment 1. A method for accessing a shared storage on a remote computing device, the method comprising:
   receiving, over a communication session established by a file system protocol, a command from a virtual machine resident on a computing device, wherein the command is in a first format associated with the file system protocol;
   upon receipt of the command, automatically converting the command from the first format to a second format, wherein the second format is different from the first format and wherein the second format is equivalent to a format associated with the virtual machine;
   automatically converting the command from the second format to a third format; and
   executing the command on the shared storage according to the third format, wherein the third format is different from the first format and the second format.
Embodiment 2. The method of embodiment 1, further comprising determining one or more properties associated with the command when the command is in the second format.
Embodiment 3. The method of embodiment 1, wherein the first format includes at least one command for enabling sharing of the shared storage.
Embodiment 4. The method of embodiment 1, wherein the first format comprises a converted file handle that tunnels commands from the second format using a filter.
Embodiment 5. A computer-readable storage medium encoding computer executable instructions which, when executed by one or more processors, performs a method for accessing a shared storage on a remote computing device, the method comprising:
   receiving, over a communication session established by a file system protocol, a command from a virtual machine resident on a computing device, wherein the command is in a first format associated with the file system protocol;
   upon receipt of the command, automatically converting the command from the first format to a second format, wherein the second format is different from the first format and wherein the second format is equivalent to a format associated with the virtual machine;
   automatically converting the command from the second format to a third format; and
   executing the command on the shared storage according to the third format, wherein the third format is different from the first format and the second format.
Embodiment 6. The computer-readable storage medium of embodiment 5, further comprising instructions for determining one or more properties associated with the command when the command is in the second format.
Embodiment 7. The computer-readable storage medium of embodiment 5, wherein the first format includes at least one command for enabling sharing of the shared storage.
Embodiment 8. The computer-readable storage medium of embodiment 5, wherein the first format comprises a converted file handle that tunnels commands from the second format using a filter.
Embodiment 9. A system comprising:
   one or more processors; and
   a memory coupled to the one or more processors, the memory for storing instructions which, when executed by the one or more processors, performs a method for accessing shared virtual storage on a remote computing device, the method comprising:
      receiving, over a communication session established by a file system protocol, a command from a virtual machine resident on a computing device, wherein the command has a tunneling format associated with the file system protocol;
      upon receipt of the command, automatically converting the command from the tunneling format to a block operation format, wherein the block operation format is associated with the virtual machine; and
      executing the command on the shared virtual storage according to one or more properties associated with the command.
Embodiment 10. The system of embodiment 9, further comprising:
   converting the command from the block operation format to a third format prior to executing the command on the shared virtual storage; and
   executing the command on the shared virtual storage according to the third format

## Claims

1. A system comprising: at least one processor; and
memory, operatively connected to the at least one processor and encoding computer executable instructions that, when executed by the at least one processor, cause the at least one processor to perform a method comprising:
receiving, over a communication session established by a file system protocol, a command, wherein the command is in a first format associated with the file system protocol;
upon receipt of the command, converting the command from the first format to a second format, wherein the second format is different from the first format;
converting the command from the second format to a third format; and providing the command in the third format.

2. The system of claim 1, wherein the file system protocol is a version of a Server Message Block (SMB) protocol.

3. The system of claim 1 or 2, wherein the first format is a tunneling format.

4. The system of any one of claims 1 to 3, wherein the second format is a block operation ^{A} format.

5. The system of any one of claims 1 to 3, wherein the second format is a Small Computer System Interface (SCSI) format.

6. The system of any one of claims 1 to 5, wherein the third format is a file system format.

7. The system of any one of claims 1 to 6, wherein the first format comprises a converted file handle that tunnels commands from the second format using a filter.

8. A method comprising:
receiving, over a communication session established by a file system protocol, a command, wherein the command is in a first format associated with the file system protocol;
upon receipt of the command, converting the command from the first format to a second format, wherein the second format is different from the first format;
converting the command from the second format to a third format; and providing the command in the third format.

9. The method of claim 8, wherein the first format is a tunneling format.

10. A computer storage medium encoding computer executable instructions that, when executed by at least one processor, perform a method comprising:
receiving, over a communication session established by a file system protocol, a command, wherein the command is in a first format associated with the file system protocol;
upon receipt of the command, converting the command from the first format to a second format, wherein the second format is different from the first format;
converting the command from the second format to a third format; and providing the command in the third format.
